# EUROPEAN PATENT APPLICATION

(11) **EP 4 443 264 A1**
(43) Date of publication of application: **09.10.2024**
(21) Application number: 22900284.5
(22) Date of filing: 17.11.2022
(51) Int. Cl.: G05D 23/30

(54) **APPLIANCE HEATING CONTROL METHOD AND APPARATUS FOR USER CUSTOMIZABLE VAPING**

(30) Priority: 02.12.2021 CN 202111459646
(71) Applicant: China Tobacco Hubei Industrial Corporation Limited, Dongxihu District Wuhan Hubei 430040 (CN)
(72) Inventor: HUANG, Ting, Wuhan, Hubei 430040 (CN); LIU, Huachen, Wuhan, Hubei 430040 (CN); TAN, Jian, Wuhan, Hubei 430040 (CN); TANG, Liangying, Wuhan, Hubei 430040 (CN); WU, Cong, Wuhan, Hubei 430040 (CN)
(74) Representative: Müller Schupfner & Partner Patent- und Rechtsanwaltspartnerschaft mbB (Muc)
(86) International application number: PCT/CN2022/132481
(87) International publication number: WO 2023/098479

(57) **Abstract**

An appliance heating control method and apparatus for user customizable vaping. The method comprises: acquiring appliance environment information and cigarette parameter information, and selecting, from a cigarette heating temperature curve library corresponding to the cigarette parameter information, an initial heating temperature curve that matches the appliance environment information (S101); generating parameter adjustment guidance information on the basis of the initial heating temperature curve, and displaying the initial heating temperature curve and the parameter adjustment guidance information (S102); and receiving a parameter adjustment instruction, adjusting the initial heating temperature curve on the basis of the parameter adjustment instruction, so as to obtain an adjusted heating temperature curve, and controlling, according to the adjusted heating temperature curve, an appliance to perform heating (S103). Therefore, a heating temperature curve is displayed to a user, and the user is guided for adjustment on the basis of parameter adjustment guidance information, such that the user can autonomously adjust the heating temperature curve on the basis of personal habits, thereby improving the vaping experience of the user under different vaping environments, different cigarette specifications and different vaping habits of the user.

## Description

The present application claims priority to Chinese Patent Application No.202111459646.2, titled "APPLIANCE HEATING CONTROL METHOD AND APPARATUS FOR USER CUSTOMIZABLE VAPING", filed on December 02, 2021 with the China National Intellectual Property Administration, which is incorporated herein by reference in its entirety.

### FIELD

The present disclosure relates to the technical field of heating control for vaping sets, and in particular to a user-customized heating control method and apparatus for a vaping set.

### BACKGROUND

An aerosol generation apparatus in a heat-not-burn vaping set generates an appropriate amount of aerosol by heating an aerosol generation substance by a heater. During this process, it is crucial to control the heater to be powered based on a required temperature curve. In the conventional technical solutions, a fixed program is pre-written in a module for controlling a vaping set in a heating mode, and the user can only selectively operate in several general heating solutions based on functions of the vaping set, which cannot fully meet personalized heating requirements under different application environments and application scenarios.

### SUMMARY

In order to solve the above problem, a user-customized heating control method and a user-customized heating control apparatus for a vaping set are provided according to embodiments of the present disclosure.

In a first aspect, a user-customized heating control method for a vaping set is provided according to an embodiment of the present disclosure, and the method includes:
obtaining environmental information of the vaping set and parameter information of a cigarette, and selecting an initial heating temperature curve matching the environmental information of the vaping set from a heating temperature curve database of the cigarette corresponding to the parameter information of the cigarette;
generating parameter adjustment guidance information based on the initial heating temperature curve, and displaying the initial heating temperature curve and the parameter adjustment guidance information; and
receiving a parameter adjustment instruction, adjusting the initial heating temperature curve based on the parameter adjustment instruction to obtain an adjusted heating temperature curve, and heating the vaping set based on the adjusted heating temperature curve.

Preferably, the obtaining environmental information of the vaping set and parameter information of a cigarette and selecting an initial heating temperature curve matching the environmental information of the vaping set from a heating temperature curve database of the cigarette corresponding to the parameter information of the cigarette includes:
obtaining the environmental information of the vaping set and the parameter information of the cigarette, where the environmental information of the vaping set includes current weather, environmental temperature and humidity, altitude data, and air pressure data, and the parameter information of the cigarette includes flavor data and specification data of the cigarette;
determining the heating temperature curve database of the cigarette corresponding to the parameter information of the cigarette, and determining an environmental category information corresponding to the environmental information of the vaping set; and
querying the heating temperature curve database of the cigarette based on the environmental category information, and determining the initial heating temperature curve matching the environmental category information.

Preferably, the generating parameter adjustment guidance information based on the initial heating temperature curve, and displaying the initial heating temperature curve and the parameter adjustment guidance information includes:
generating the parameter adjustment guidance information based on the initial heating temperature curve;
determining vaping nodes on the initial heating temperature curve, marking aerosol generation rates corresponding to the vaping nodes, and calculating a total amount of aerosols generated between two adjacent vaping nodes; and
displaying the initial heating temperature curve and the parameter adjustment guidance information.

Preferably, the generating parameter adjustment guidance information based on the initial heating temperature curve includes:
simulately adjusting the initial heating temperature curve based on one or more predetermined adjustment solutions to obtain simulated heating temperature curves;
comparing the simulated heating temperature curves with the initial heating temperature curve to determine adjustment results corresponding to the one or more predetermined adjustment solutions; and
generating the parameter adjustment guidance information based on the adjustment results corresponding to the one or more predetermined adjustment solutions.

Preferably, before heating the vaping set based on the adjusted heating temperature curve, the method further includes:
obtaining, in a case that the vaping set enters into an overheated state before a predetermined time period expires, a current temperature of a heating element in the vaping set; and
determining a preheating decrease time period corresponding to the current temperature based on a predetermined correspondence, and optimizing a preheating time period in the adjusted heating temperature curve based on the preheating decrease time period.

Preferably, before heating the vaping set based on the adjusted heating temperature curve, the method further includes:
obtaining a current remaining power of the vaping set;
determining, when the current remaining power is lower than a predetermined power, a standard power consumption corresponding to the adjusted heating temperature curve; and
optimizing the adjusted heating temperature curve based on a ratio of the standard power consumption to the current remaining power.

Preferably, the method further includes:
storing the adjusted heating temperature curve as a historical heating temperature curve in a historical database;
obtaining, in response toa read instruction, the environmental information of the vaping set and searching the historical database for historical heating temperature curves matching the environmental information of the vaping set; and
displaying the historical heating temperature curves.

In a second aspect, a user-customized heating control apparatus for a vaping set is provided according to an embodiment of the present disclosure, and the apparatus includes: an obtaining module, a processing module, and an adjusting module. The obtaining module is configured to obtain environmental information of the vaping set and parameter information of a cigarette, and select an initial heating temperature curve matching the environmental information of the vaping set from a heating temperature curve database of the cigarette corresponding to the parameter information of the cigarette. The processing module is configured to generate parameter adjustment guidance information based on the initial heating temperature curve, and display the initial heating temperature curve and the parameter adjustment guidance information. The adjusting module is configured to receive a parameter adjustment instruction, adjust the initial heating temperature curve based on the parameter adjustment instruction to obtain an adjusted heating temperature curve, and heat the vaping set based on the adjusted heating temperature curve.

In a third aspect, an electronic device is provided according to an embodiment of the present disclosure. The electronic device includes a memory, a processor and a computer program stored in the memory and executable by the processor. The processor, when executing the computer program, performs the steps in the method according to the first aspect or any possible implementation in the first aspect.

In a fourth aspect, a computer-readable storage medium is provided according to an embodiment of the present disclosure. The computer-readable storage medium stores a computer program. The computer program, when executed by a processor, causes the processor to perform the steps in the method according to the first aspect or any possible implementation in the first aspect.

The beneficial effects of the present disclosure are as follows. A heating temperature curve suitable for specification parameters of a current cigarette is selected based on a vaping environment where the user is currently located, the heating temperature curve is displayed to the user, and adjustment guidance is provided to the user based on parameter adjustment guidance information, so that the user can adjust the heating temperature curve independently based on personal habit, improving the vaping experience of the user under different vaping environments, different cigarette specifications, and different vaping habits.

### BRIEF DESCRIPTION OF THE DRAWINGS

In order to more clearly illustrate technical solutions in embodiments of the present disclosure, drawings to be used in the embodiments are briefly described hereinafter. It is apparent that the drawings described below show only the embodiments of the present disclosure, and other drawings may be obtained by those skilled in the art from the drawings without any creative work.
Figure 1 is a flowchart of a user-customized heating control method for a vaping set according to an embodiment of the present disclosure;
Figure 2 is a schematic structural diagram of a user-customized heating control apparatus for a vaping set according to an embodiment of the present disclosure; and
Figure 3 is a schematic structural diagram of an electronic device according to an embodiment of the present disclosure.

### DETAILED DESCRIPTION OF EMBODIMENTS

Technical solutions of embodiments of the present disclosure are clearly and completely described hereinafter in conjunction with the drawings of the embodiments of the present disclosure.

In the introduction hereinafter, the terms "first", "second" are merely for a purpose of description, and should not be understood as indicating or implying relative importance. The following introduction provides multiple embodiments according to the present disclosure, and different embodiments may be replaced or combined. Hence, the present disclosure may also be considered to include all possible combinations of the same and/or different embodiments described. Thus, if one embodiment contains features A, B and C, and another embodiment contains features B and D, then the present disclosure should also be considered to include all other possible combinations containing one or more of A, B, C and D, although this embodiment may not be clearly written in the following content.

The following description provides examples, and does not limit the scope, applicability or examples described in the claims. Changes may be made in the function and arrangement of described elements without departing from the scope of the present disclosure. Various examples may be omitted, substituted, or added with various procedures or components as appropriate. For example, the methods described may be performed in an order different from that described, and various steps may be added, omitted, or combined. Furthermore, features described with respect to some examples may be combined into other examples.

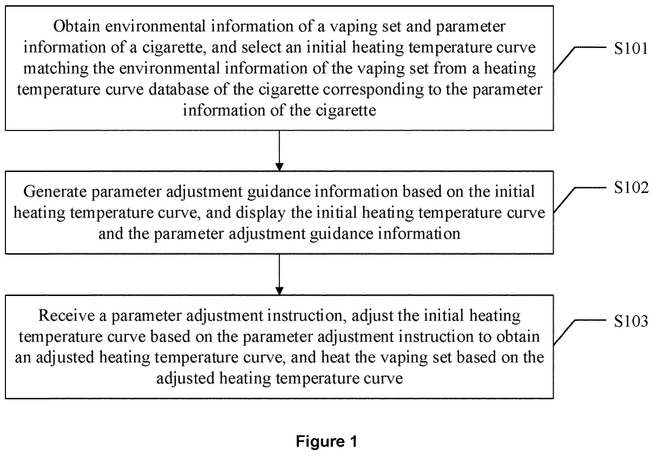

Reference is made to Figure 1, which is a flowchart of a user-customized heating control method for a vaping set according to an embodiment of the present disclosure. In this embodiment of the present disclosure, the method includes the following steps S101 to S103.

In step S101, environmental information of the vaping set and parameter information of a cigarette are obtained, and an initial heating temperature curve matching the environmental information of the vaping set is selected from a heating temperature curve database of the cigarette corresponding to the parameter information of the cigarette.

The execution subject in the present disclosure may be a controller in a vaping set for heating a cigarette.

In the embodiment of the present disclosure, the environmental information of the vaping set may be understood as relevant parameter information of an environment in which the vaping set is located, such as temperature and humidity, altitude, air pressure, or the like. Specifically, the environmental information may be obtained by measuring the surrounding environment by a sensor on the vaping set, or obtained by querying real-time data information from a meteorological station where the vaping set is located after the controller is connected to Internet.

In the embodiment of the present disclosure, the parameter information of the cigarette may be understood as relevant parameter information corresponding to a cigarette currently inserted into the vaping set, such as a size specification of the cigarette. Specifically, the parameter information may be obtained by reading data such as a two-dimensional code or a barcode on the inserted cigarette.

In the embodiment of the present disclosure, for a same type of cigarettes in varying environments, a change in the environmental parameter such as temperature and humidity, air pressure, and altitude has an impact on the heating process, thereby affecting the vaping experience of the users. In addition, various cigarettes are different in size and tobacco flavor, which may affect the vaping experience of the users. Although the users hope to personalize the entire vaping process of the cigarette, the users are not professional developers and do not know how to define the entire heating process of the cigarette from scratch. Therefore, in the present disclosure, a general heating curve suitable for a current environment, that is, the initial heating temperature curve is firstly selected based on the environmental information of the vaping set and the parameter information of the cigarette that are two factors significantly affecting the vaping experience of the users.

Specifically, the type of the cigarette may be determined based on the parameter information of the cigarette, and then a heating temperature curve database corresponding to the type of cigarette may be determined. The heating temperature curve database of the cigarette may include heating temperature curves suitable for various environments obtained by developers based on experimental data during the development phase. After the heating temperature curve database of the cigarette is determined, an initial heating temperature curve suitable for an environment in which the vaping set is currently located is obtained by matching the environmental information of the vaping set with various curves in the curve database.

In an embodiment, step S101 includes: obtaining the environmental information of the vaping set and the parameter information of the cigarette, where the environmental information of the vaping set includes current weather, environmental temperature and humidity, altitude data, and air pressure data, and the parameter information of the cigarette includes flavor data and specification data of the cigarette; determining the heating temperature curve database of the cigarette corresponding to the parameter information of the cigarette, and determining an environmental category information corresponding to the environmental information of the vaping set; and querying the heating temperature curve database of the cigarette based on the environmental category information, and determining the initial heating temperature curve matching the environmental category information.

In the embodiment of the present disclosure, the environmental information of the vaping set in actual situations is not completely identical to the environmental information in the database. If matching is directly based on the environmental information of the vaping set, the environmental information has a large amount of data, resulting in low calculation efficiency in matching. Therefore, in the present disclosure, multiple pieces of environmental category information are defined, and each piece of the multiple pieces of environmental category information corresponds to environmental information in a specified range of the vaping set. After the parameter information of the cigarette is obtained and the heating temperature curve database of the cigarette is determined, the initial heating temperature curve is obtained by matching the environmental information category corresponding to the environmental information of the vaping set in the heating temperature curve database of the cigarette.

In step S102, parameter adjustment guidance information is generated based on the initial heating temperature curve, and the initial heating temperature curve and the parameter adjustment guidance information are displayed.

In the embodiment of the present disclosure, the parameter adjustment guidance information may be understood as information for guiding the users on how to perform parameter adjustment on the heating temperature curve or information for indicating which one parameter is to be adjusted to affect which data.

In the embodiment of the present disclosure, based on the obtained initial heating temperature curve, the controller may generate the parameter adjustment guidance information suitable for the initial heating temperature curve. After generating the parameter adjustment guidance information, the controller displays the parameter adjustment guidance information and the initial heating temperature curve together, so that the user obtains the current heating curve and knows which parameter is to be adjusted for adjusting an aspect of the curve, thereby facilitating the user performing personalized adjustment on the vaping. The initial heating temperature curve may be displayed through a display screen arranged on the vaping set, or displayed through an APP that is associated with the vaping set and installed in a mobile terminal.

In an embodiment, step S102 includes: generating the parameter adjustment guidance information based on the initial heating temperature curve; determining vaping nodes on the initial heating temperature curve, marking aerosol generation rates corresponding to the vaping nodes, and calculating a total amount of aerosols generated between two adjacent vaping nodes; and displaying the initial heating temperature curve and the parameter adjustment guidance information.

In the embodiment of the present disclosure, before the initial heating temperature curve and the parameter adjustment guidance information are displayed, vaping nodes on the initial heating temperature curve are determined and marked, so that the users may further intuitively understand values represented by the initial heating temperature curve. In addition, an aerosol generation rate at a heating temperature corresponding to each of the vaping nodes is marked at the vaping node and a total amount of aerosols generated between two adjacent vaping nodes is marked. The initial heating temperature curve represents changes in heating temperature over time. After the relevant data of all the nodes are marked, the users can intuitively understand parameter changes throughout the entire vaping process, so that the users can adjust the initial heating temperature curve according to the users' requirements.

For example, after understanding changes caused by performing different parameter adjustment based on the parameter adjustment guidance information, the users may perform personalized adjustment based on the data of the initial heating temperature curve and the users' requirements. Specifically, if the user prefers a strong sense of smoke, the user may configure a high heating temperature throughout an initial vaping period and an end vaping period, to improve the generation of aerosols. If the user want to quickly obtain vaping experience in some situations, such as during a meeting break or a boarding break, the user may shorten a vaping time period. If the user wishes to increase the concentration of smoke vaping once during the vaping process and prolong the entire vaping time period, the user may extend a waiting time period between two vaping nodes.

In an embodiment, the parameter adjustment guidance information is generated based on the initial heating temperature curve by: simulately adjusting the initial heating temperature curve based on one or more predetermined adjustment solutions to obtain simulated heating temperature curves; comparing the simulated heating temperature curves with the initial heating temperature curve to determine adjustment results corresponding to the one or more predetermined adjustment solutions; and generating the parameter adjustment guidance information based on the adjustment results corresponding to the solutions.

In the embodiment of the present disclosure, multiple adjustment solutions are predetermined, and each of the adjustment solutions corresponds to adjusting a parameter of the curve. The initial heating temperature curve is simulately adjusted based on the multiple adjustment solutions, to obtain multiple simulated heating temperature curves. The multiple simulated heating temperature curves are compared with the initial heating temperature curve to obtain the adjustment results corresponding to the solutions, where each of the adjustment results represents a data change by adjusting a parameter. The adjustment results corresponding to the solutions are integrated to generate the parameter adjustment guidance information for providing the users with parameter adjustment guidance, so that the users can correctly adjust parameter data according to the users' requirements, realizing personalized adjustment.

In step S103, a parameter adjustment instruction is received, the initial heating temperature curve is adjusted based on the parameter adjustment instruction to obtain an adjusted heating temperature curve, and the vaping set is heated based on the adjusted heating temperature curve.

In the embodiment of the present disclosure, the parameter adjustment instruction may be understood as instruction data generated by performing an adjustment operation by the user on the relevant parameter data of the initial heating temperature curve.

In the embodiment of the present disclosure, in the user performing a personalized adjustment on the initial heating temperature curve based on the displayed parameter adjustment guidance information, the parameter adjustment instruction is generated. On receipt of the parameter adjustment instruction, the controller adjusts the initial heating temperature curve based on the parameter adjustment instruction, then an adjusted heating temperature curve is generated, and then the vaping set is heated based on the adjusted heating temperature curve, realizing a personalized heating process customized by the user.

In an embodiment, before the vaping set is heated based on the adjusted heating temperature curve, the method further includes: obtaining, in a case that the vaping set enters into an overheated state before a predetermined time period expires, a current temperature of a heating element in the vaping set; determining a preheating decrease time period corresponding to the current temperature based on a predetermined correspondence, and optimizing a preheating time period in the adjusted heating temperature curve based on the preheating decrease time period.

In the embodiment of the present disclosure, the adjusted heating temperature curve obtained in the foregoing process represents changes in heating temperature throughout an entire process from heating up the vaping set to the end of the current vaping. In a case that the vaping set enters the overheated state in a short time period, for example, in a case that the user just vapes the first cigarette, the heating element in the vaping set is not completely cooled and has a high temperature. Therefore, a current temperature of the heating element is obtained, and a preheating decrease time period corresponding to the current temperature is determined based on the predetermined correspondence. That is, a decrease time period by which the initial preheating time period is to be deceased in the vaping process is determined, and the preheating time period in the adjusted heating temperature curve is optimized based on the decrease time period, thereby ensuring a good vaping experience of the user, and avoiding burning the mouth of the user caused by excessively heating the vaping set. The predetermined correspondence may be determined through experiments by developers in the early stage of design process, or may be calculated by using a trained neural convolutional network model.

In an embodiment, before the vaping set is heated based on the adjusted heating temperature curve, the method further includes: obtaining a current remaining power of the vaping set; determining, when the current remaining power is lower than a predetermined power, a standard power consumption corresponding to the adjusted heating temperature curve; and optimizing the adjusted heating temperature curve based on a ratio of the standard power consumption to the current remaining power.

In the embodiment of the present disclosure, the vaping set is heated by electrically controlled the heating element. In a case that the current remaining power of the vaping set is insufficient, the entire heating process of the adjusted heating temperature curve cannot be achieved. In this case, the controller calculates the ratio of the standard power consumption to the current remaining power, and proportionally decreases, based on the ratio, a heating temperature corresponding to each part of the entire heating curve, ensuring that the heating temperature curve reaches a state meeting the heating generation of aerosols and the generation amount of aerosols is not saturated throughout the entire vaping process, thereby ensuring the current remaining power can support to the end of the current vaping.

In an embodiment, the method further includes: storing the adjusted heating temperature curve as a historical heating temperature curve in a historical database; obtaining, in response to a read instruction, the environmental information of the vaping set and searching the historical database for historical heating temperature curves matching the environmental information of the vaping set; and displaying the historical heating temperature curves.

In the embodiment of the present disclosure, the adjusted heating temperature curve is stored as a historical heating temperature curve in the historical database. Thus, in a case that the user has a same vaping requirement in a same situation next time, the heating temperature curve corresponding to the vaping requirement may be directly called from the historical database to control the heating process. Since there may be a large number of personalized heating temperature curves set by the user, in response to the read instruction which indicates that the user wants to select a personalized curve previously set by the user, the environmental information of the vaping set is obtained again, improving the efficiency of the user in selecting a suitable curve from the heating temperature curves. Firstly, the curves in the historical database are initially screened based on the environmental information of the vaping set, and only the historical heating temperature curves (that is, the heating temperature curves suitable for the current environment) matching the environmental information are displayed, thereby improving the selection efficiency of the user.

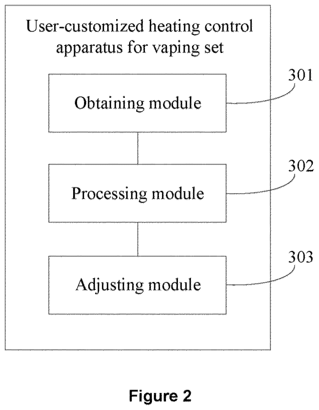

A user-customized heating control apparatus for a vaping set according to the embodiments of the present disclosure is described in detail below with reference to Figure 2. It should be noted that the user-customized heating control apparatus for the vaping set shown in Figure 2 is configured to perform the method according to the embodiment shown in Figure 1 of the present disclosure, and for the sake of illustration, only the parts thereof relevant to the embodiment of the present disclosure are shown. For the specific technical details not disclosed, reference is made to the embodiment shown in Figure 1 according to the present disclosure.

Reference is made to Figure 2, which is a schematic structural diagram of a user-customized heating control apparatus for a vaping set according to an embodiment of the present disclosure. As shown in Figure 2, the apparatus includes: an obtaining module 201, a processing module 202 and an adjusting module 203.

The obtaining module 201 is configured to obtain environmental information of the vaping set and parameter information of a cigarette, and select an initial heating temperature curve matching the environmental information of the vaping set from a heating temperature curve database of the cigarette corresponding to the parameter information of the cigarette.

The processing module 202 is configured to generate parameter adjustment guidance information based on the initial heating temperature curve, and display the initial heating temperature curve and the parameter adjustment guidance information.

The adjusting module 203 is configured to receive a parameter adjustment instruction, adjust the initial heating temperature curve based on the parameter adjustment instruction to obtain an adjusted heating temperature curve, and heat the vaping set based on the adjusted heating temperature curve.

In an embodiment, the obtaining module 201 includes a first obtaining unit, a first determining unit and a first querying unit.

The first obtaining unit is configured to obtain the environmental information of the vaping set and the parameter information of the cigarette, where the environmental information of the vaping set includes current weather, environmental temperature and humidity, altitude data, and air pressure data, and the parameter information of the cigarette includes flavor data and specification data of the cigarette.

The first determining unit is configured to determine the heating temperature curve database of the cigarette corresponding to the parameter information of the cigarette, and determine environmental category information corresponding to the environmental information of the vaping set.

The first querying unit is configured to query the heating temperature curve database of the cigarette based on the environmental category information, and determine the initial heating temperature curve matching the environmental category information.

In an embodiment, the processing module 202 includes a first generating unit, a second determining unit and a first display unit.

The first generating unit is configured to generate the parameter adjustment guidance information based on the initial heating temperature curve.

The second determining unit is configured to determine vaping nodes on the initial heating temperature curve, mark aerosol generation rates corresponding to the vaping nodes, and calculate a total amount of aerosols generated between two adjacent vaping nodes.

The first display unit is configured to display the initial heating temperature curve and the parameter adjustment guidance information.

In an embodiment, the first generating unit includes an adjusting element, a comparing element and a generating element.

The adjusting element is configured to simulately adjust the initial heating temperature curve based on one or more predetermined adjustment solutions to obtain simulated heating temperature curves.

The comparing element is configured to compare the simulated heating temperature curves with the initial heating temperature curve to determine adjustment results corresponding to the one or more predetermined adjustment solutions.

The generating element is configured to generate the parameter adjustment guidance information based on the adjustment results corresponding to the solutions.

In an embodiment, the apparatus further includes a first determining module and a first optimizing module.

The first determining module is configured to obtain, in a case that the vaping set enters into an overheated state before a predetermined time period expires, a current temperature of a heating element in the vaping set.

The first optimizing module is configured to determine a preheating decrease time period corresponding to the current temperature based on a predetermined correspondence, and optimize a preheating time period in the adjusted heating temperature curve based on the preheating decrease time period.

In an embodiment, the apparatus further includes a power obtaining module, a second determining module and a second optimizing module.

The power obtaining module is configured to obtain a current remaining power of the vaping set.

The second determining module is configured to determine, when the current remaining power is lower than a predetermined power, a standard power consumption corresponding to the adjusted heating temperature curve.

The second optimizing module is configured to optimize the adjusted heating temperature curve based on a ratio of the standard power consumption to the current remaining power.

In an embodiment, the apparatus further includes a storage module, a receiving module and a display module.

The storage module is configured to store the adjusted heating temperature curve as a historical heating temperature curve in a historical database.

The receiving module is configured to obtain, in response to a read instruction, the environmental information of the vaping set and search the historical database for historical heating temperature curves matching the environmental information of the vaping set.

The display module is configured to display the historical heating temperature curves.

Those skilled in the art can clearly understand that the technical solutions of the embodiments of the present disclosure may be implemented by means of software and/or hardware. "Unit" and "module" in this specification refer to software and/or hardware that can independently complete or cooperate with other components to complete specific functions, where the hardware may be, for example, a field-programmable gate array (FPGA), or an integrated circuit (IC).

Each processing unit and/or module in the embodiment of the present disclosure may be implemented by an analog circuit for realizing the functions described in the embodiments of the present disclosure, or may be realized by software for performing the functions described in the embodiments of the present disclosure.

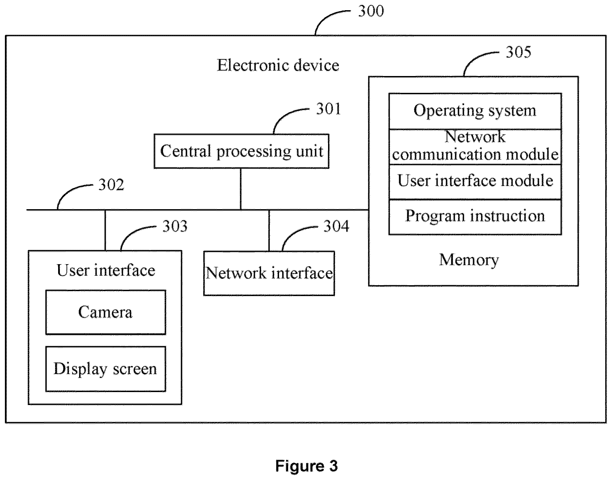

Reference is made to Figure 3, which is a schematic structural diagram of an electronic device according to an embodiment of the present disclosure. The electronic device may be used to implement the method in the embodiment shown in Figure 1. As shown in Figure 3, the electronic device 300 may include: at least one central processing unit 301, at least one network interface 304, a user interface 303, a memory 305 and at least one communication bus 302.

The communication bus 302 is used to implement connection and communication between the modules.

The user interface 303 may include a display screen (Display) and a camera (Camera). In an embodiment, the user interface 303 may further include a standard wired interface and a wireless interface.

In an embodiment, the network interface 304 may include a standard wired interface and a wireless interface (such as a WI-FI interface).

The central processing unit 301 may include one or more processing cores. The central processing unit 301 connects various parts in the electronic device 300 by using various interfaces and lines, and executes various functions of the terminal 300 and processes data by running or executing instructions, programs, code sets or instruction sets stored in the memory 305 and calling data stored in the memory 305. In an embodiment, the central processing unit 301 may be implemented in at least one hardware manner selected from a digital signal processing (DSP), a field-programmable gate array (FPGA), and a programmable logic array (PLA). The central processing unit 301 may integrate one or a combination of a central processing unit (CPU), a graphics central processing unit (GPU), a modem, or the like. The CPU mainly handles the operating system, user interface, application programs, or the like; the GPU is used to render and draw the content to be displayed on the display screen; the modem is used to handle wireless communication. It can be understood that, the above modem may not be integrated into the central processing unit 301, and may be implemented by a single chip.

The memory 305 may include a random access memory (RAM), or may include a read-only memory. In an embodiment, the memory 305 includes a non-transitory computer-readable storage medium. The memory 305 may be used to store an instruction, a program, codes, a code set, or an instruction set. The memory 305 may include a program storage area and a data storage area, where the program storage area may store instructions for implementing an operating system, instructions for at least one function (such as a touch function, a sound playback function, or an image playback function), and instructions for implementing the embodiments of the method described above; the data storage area may store the data and the like involved in the embodiments of the method described above. In an embodiment, the memory 305 may be at least one storage device arranged away from the foregoing central processing unit 301. As shown in Figure 3, the memory 305 as a computer storage medium may include an operating system, a network communication module, a user interface module, and a program instruction.

In the electronic device 300 shown in Figure 3, the user interface 303 is mainly used to provide a user with an input interface to obtain data inputted by the user; and the central processing unit 301 may be used to invoke a user-customized heating control application program for a vaping set which is stored in the memory 305, to perform the following operations:
obtaining environmental information of the vaping set and parameter information of a cigarette, and selecting an initial heating temperature curve matching the environmental information of the vaping set from a heating temperature curve database of the cigarette corresponding to the parameter information of the cigarette;
generating parameter adjustment guidance information based on the initial heating temperature curve, and displaying the initial heating temperature curve and the parameter adjustment guidance information; and
receiving a parameter adjustment instruction, adjusting the initial heating temperature curve based on the parameter adjustment instruction to obtain an adjusted heating temperature curve, and heating the vaping set based on the adjusted heating temperature curve.

A computer-readable storage medium is further provided according to the present disclosure. The computer-readable storage medium stores a computer program. The computer program, when executed by a processor, performs steps in the method described above. The computer-readable storage medium may include, but is not limited to, any type of disk, including a floppy disk, optical disk, DVD, CD-ROM, micro-driver, magneto-optical disk, ROM, RAM, EPROM, EEPROM, DRAM, VRAM, flash memory device, magnetic card or optical card, nano-system (including molecular memory IC), or any type of medium or device suitable for storing instructions and/or data.

It should be noted that for the foregoing embodiments of the method, for the sake of simple description, they are expressed as a series of action combinations, but those skilled in the art should know that the present disclosure is not limited by the described action sequence. Depending on the present disclosure, certain steps may be performed in other orders or simultaneously. Secondly, those skilled in the art should also know that the embodiments described in the specification are some preferred embodiments, and the actions and modules involved are not necessarily required by the present disclosure.

In the foregoing embodiments, the descriptions of each embodiment have their own emphases, and for parts not described in detail in one embodiment, reference may be made to relevant descriptions of other embodiments.

In the several embodiments provided in the present disclosure, it should be understood that the disclosed apparatus may be implemented in other ways. For example, the embodiments of the apparatus described above are only illustrative. For example, the division of the units is only a logical function division. In actual implementation, there may be other division manners. For example, multiple units or components may be combined or may be integrated into another system, or some features may be ignored, or not implemented. Additionally, the mutual coupling or direct coupling or communication connection shown or discussed may be through some service interfaces, and the indirect coupling or communication connection of apparatuses or units, and may be in electrical or other forms.

The units described as separate components may or may not be physically separated, and the components shown as units may or may not be physical units, that is, they may be located in one place, or may be distributed to multiple network units. Some or all of the units may be selected according to actual needs to achieve the purpose of the solution of the embodiments.

In addition, each functional unit in each embodiment of the present disclosure may be integrated into one processing unit, each unit may exist separately physically, or two or more units may be integrated into one unit. The integrated units described above may be implemented in the form of hardware or in the form of a software function unit.

If the integrated unit is realized in the form of a software function unit and sold or used as an independent product, the integrated unit can be stored in a computer-readable memory. Based on this understanding, the technical solutions of the embodiments of the present disclosure are essentially or a part that contributes to the conventional technology, or all or part of the technical solutions may be embodied in the form of a software product. The computer software product is stored in a memory and includes several instructions so that a computer device (such as a personal computer, a server, or a network device) executes all or part of the steps of the method described in the embodiments of the present disclosure. The foregoing memory includes: various media capable of storing program codes such as a U disk, a read-only memory (ROM), a random access memory (RAM), a mobile hard disk, a magnetic disk or an optical disk.

Those skilled in the art can understand that all or some of the steps in the various methods of the embodiments described above can be completed by a program instructing the related hardware. The program may be stored in a computer-readable memory, and the memory may include: a flash memory disk, a read-only memory (ROM), a random access memory (RAM), a magnetic disk, an optical disk, or the like.

The embodiments described above are merely some exemplary embodiments of the present disclosure, and should not limit the scope of the present disclosure. That is, all equivalent changes and modifications made according to the teachings of the present disclosure still fall within the scope of the present disclosure. Embodiments of the present disclosure will be readily apparent to those skilled in the art from consideration of the specification and practice of the disclosure herein. This application is intended to cover any variation, application or adapted modification of the present disclosure. These variation, application or adapted modification follow the general principles of the present disclosure and include common knowledge or conventional technical means in the technical field not described in the present disclosure. The specification and embodiments are to be considered exemplary only, and the scope and spirit of the present disclosure are defined by the claims.

## Claims

1. A user-customized heating control method for a vaping set, comprising:
obtaining environmental information of the vaping set and parameter information of a cigarette, and selecting an initial heating temperature curve matching the environmental information of the vaping set from a heating temperature curve database of the cigarette corresponding to the parameter information of the cigarette;
generating parameter adjustment guidance information based on the initial heating temperature curve, and displaying the initial heating temperature curve and the parameter adjustment guidance information; and
receiving a parameter adjustment instruction, adjusting the initial heating temperature curve based on the parameter adjustment instruction to obtain an adjusted heating temperature curve, and heating the vaping set based on the adjusted heating temperature curve.

2. The method according to claim 1, wherein the obtaining environmental information of the vaping set and parameter information of a cigarette and selecting an initial heating temperature curve matching the environmental information of the vaping set from a heating temperature curve database of the cigarette corresponding to the parameter information of the cigarette comprises:
obtaining the environmental information of the vaping set and the parameter information of the cigarette, wherein the environmental information of the vaping set comprises current weather, environmental temperature and humidity, altitude data, and air pressure data, and the parameter information of the cigarette comprises flavor data and specification data of the cigarette;
determining the heating temperature curve database of the cigarette corresponding to the parameter information of the cigarette, and determining an environmental category information corresponding to the environmental information of the vaping set; and
querying the heating temperature curve database of the cigarette based on the environmental category information, and determining the initial heating temperature curve matching the environmental category information.

3. The method according to claim 1, wherein the generating parameter adjustment guidance information based on the initial heating temperature curve and displaying the initial heating temperature curve and the parameter adjustment guidance information comprises:
generating the parameter adjustment guidance information based on the initial heating temperature curve;
determining vaping nodes on the initial heating temperature curve, marking aerosol generation rates corresponding to the vaping nodes, and calculating a total amount of aerosols generated between two adjacent vaping nodes; and
displaying the initial heating temperature curve and the parameter adjustment guidance information.

4. The method according to claim 1 or 3, wherein the generating parameter adjustment guidance information based on the initial heating temperature curve comprises:
simulately adjusting the initial heating temperature curve based on one or more predetermined adjustment solutions to obtain simulated heating temperature curves;
comparing the simulated heating temperature curves with the initial heating temperature curve to determine adjustment results corresponding to the one or more predetermined adjustment solutions; and
generating the parameter adjustment guidance information based on the adjustment results corresponding to the one or more predetermined adjustment solutions.

5. The method according to claim 1, wherein before heating the vaping set based on the adjusted heating temperature curve, the method further comprises:
obtaining, in a case that the vaping set enters into an overheated state before a predetermined time period expires, a current temperature of a heating element in the vaping set; and
determining a preheating decrease time period corresponding to the current temperature based on a predetermined correspondence, and optimizing a preheating time period in the adjusted heating temperature curve based on the preheating decrease time period.

6. The method according to claim 1, wherein before heating the vaping set based on the adjusted heating temperature curve, the method further comprises:
obtaining a current remaining power of the vaping set;
determining, when the current remaining power is lower than a predetermined power, a standard power consumption corresponding to the adjusted heating temperature curve; and
optimizing the adjusted heating temperature curve based on a ratio of the standard power consumption to the current remaining power.

7. The method according to claim 1, further comprising:
storing the adjusted heating temperature curve as a historical heating temperature curve in a historical database;
obtaining, in response to a read instruction, the environmental information of the vaping set and searching the historical database for historical heating temperature curves matching the environmental information of the vaping set; and
displaying the historical heating temperature curves.

8. A user-customized heating control apparatus for a vaping set, comprising:
an obtaining module, configured to obtain environmental information of the vaping set and parameter information of a cigarette, and select an initial heating temperature curve matching the environmental information of the vaping set from a heating temperature curve database of the cigarette corresponding to the parameter information of the cigarette;
a processing module, configured to generate parameter adjustment guidance information based on the initial heating temperature curve, and display the initial heating temperature curve and the parameter adjustment guidance information; and
an adjusting module, configured to receive a parameter adjustment instruction, adjust the initial heating temperature curve based on the parameter adjustment instruction to obtain an adjusted heating temperature curve, and heat the vaping set based on the adjusted heating temperature curve.

9. An electronic device, comprising:
a memory;
a processor; and
a computer program stored in the memory and executable by the processor;
wherein the processor, when executing the computer program, performs the method according to any one of claims 1 to 7.

10. A computer-readable storage medium, storing a computer program, wherein the computer program, when executed by a processor, causes the processor to perform the method according to any one of claims 1 to 7.
